# FASCICULE DE BREVET EUROPEEN

(11) **EP 3 027 952 B1**
(45) Date de publication et mention de la délivrance du brevet: **18.07.2018**
(21) Numéro de dépôt: 14766526.9
(22) Date de dépôt: 30.07.2014
(51) Int. Cl.: F16L 55/168, F16L 58/16, F16B 15/00

(54) **PLAQUE DE RETENUE POUR BANDE DE RENFORCEMENT**
HALTEPLATTE FÜR EINEN VERSTÄRKUNGSSTREIFEN
RETAINING PLATE FOR A REINFORCING STRIP

(30) Priorité: 30.07.2013 MC 2594
(43) Date de publication de la demande: 08.06.2016
(73) Titulaire: 3X Engineering, 98000 Monaco (MC)
(72) Inventeur: BOULET D'AURIA, Stanislas, F-06230 Villefranche Sur Mer (FR); SLIMANI, Hacen, F-06000 Nice (FR); DAUMAS, Didier, F-06360 Eze (FR)
(74) Mandataire: Bonneau, Florence
(86) Numéro de dépôt international: PCT/IB2014/001415
(87) Numéro de publication internationale: WO 2015/015279

(56) Documents cités:
- EP-A1- 0 542 587
- GB-A- 2 194 903
- GB-A- 2 214 427
- US-A- 36 812
- US-A- 4 679 367

## Description

### Domaine technique

La présente invention concerne la réparation des canalisations utilisées pour le transport de fluide tel que du pétrole et concerne en particulier un manchon comportant une plaque de retenue pour bandes de renforcement utilisé dans la réparation des canalisations de transport de fluides.

### Etat de la technique

La réparation d'une canalisation de transport de fluide telle qu'un pipeline pour acheminer du pétrole, lorsqu'elle présente une dégradation, comporte toujours l'installation d'une bande de renforcement autour de la partie de la canalisation qui est dégradée. Cette bande de renforcement est généralement en matériau souple présentant de très bonnes propriétés mécaniques de traction telle qu'une grande résistance à la rupture. Un tel matériau est de préférence du Kevlar (marque déposée) de la famille des aramides ou de la fibre de verre.

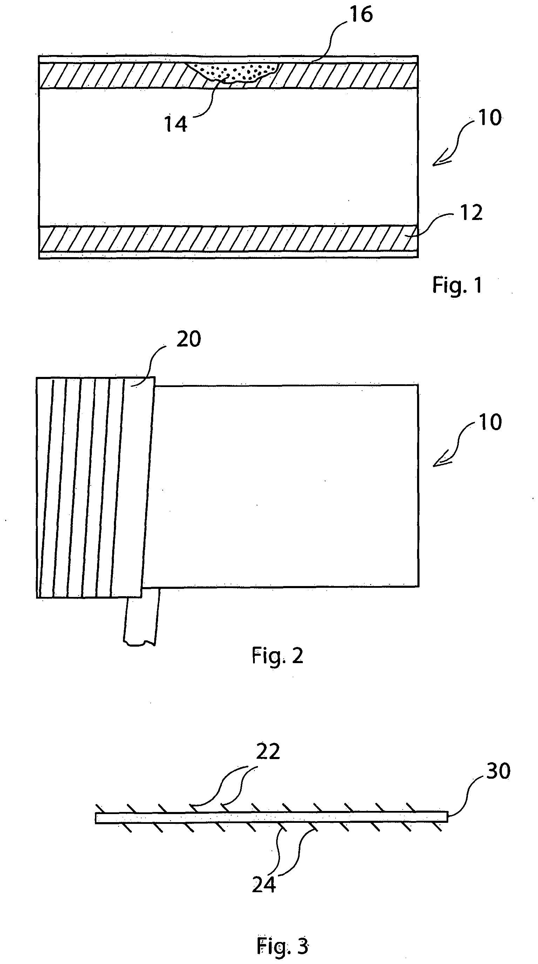

La figure 1 montre une canalisation 10 comportant une portion dégradée 14 à sa périphérie. Pour la réparation, on commence par colmater la partie dégradée au moyen d'une résine polymère. Puis, on installe un manchon 16 qui recouvre la partie dégradée. Un tel manchon est constitué d'une bande de renforcement entourant la canalisation et recouverte d'une résine à réticulation au fur et à mesure qu'on enroule la bande de renforcement.

A noter qu'un manchon peut également être installé sur la partie d'une canalisation comportant un amincissement résultant d'une dégradation à l'intérieur de la canalisation.

La figure 2 montre comment est installée la bande de renforcement. Le début de la bande 20 est d'abord fixée sur la canalisation par tout moyen approprié. Puis la bande de renforcement est enroulée sous traction autour de la canalisation en recouvrant à chaque enroulement une partie de l'enroulement précédent, en général la moitié de la largeur de la bande de renforcement.

Mais, du fait qu'une bande de renforcement a forcément une longueur limitée, cette longueur peut être insuffisante pour effectuer l'enroulement de la partie dégradée de la canalisation, et il est souvent nécessaire d'enrouler au moins une autre bande de renforcement à la suite de la première bande de renforcement. La bande de renforcement étant enroulée sous tension, il est malheureusement difficile de la maintenir en place et l'empêcher de glisser au moins lors du premier enroulement.

A noter que le document GB 2 214 427 décrit une plaque de retenue en matériau rigide comportant des pointes sur chacune de ses deux faces, les pointes de chacune des faces faisant un angle avec la base de la face sur laquelle elles se trouvent, la plaque pouvant être, d'une part, rendue solidaire par les pointes d'une de ses faces à une première bande et d'autre part, rendue solidaire à une deuxième bande. Mais ce document ne décrit pas un manchon adapté pour la réparation d'une canalisation mais une plaque de retenue pour empêcher le glissement entre deux tapis superposés.

### Exposé de l'invention

C'est pourquoi le but de l'invention est de fournir un manchon comportant un moyen empêchant une nouvelle bande de renforcement de glisser lors de son enroulement sous tension.

Un autre but de l'invention est de fournir un manchon comportant un moyen permettant de rendre solidaire une nouvelle bande de renforcement lors de son enroulement à la suite d'une autre bande de renforcement déjà enroulée autour d'une canalisation.

L'objet principal de l'invention est donc un manchon adapté à la réparation d'une portion dégradée d'une canalisation comprenant une première bande de renforcement placée sur la portion dégradée de la canalisation et au moins une deuxième bande de renforcement, les bandes de renforcement étant reliées par une plaque de retenue en matériau rigide comportant des pointes sur chacune de ses deux faces, les pointes de chacune des faces d'une longueur comprise entre 1 et 3 mm faisant un angle avec la base de la face sur laquelle elles se trouvent compris entre 30° et 60°, la plaque étant, d'une part, rendue solidaire par les pointes d'une de ses faces à la première bande de renforcement, les pointes étant inclinées vers l'extrémité finale de la première bande de renforcement et, d'autre part, rendue solidaire de la deuxième bande de renforcement à enrouler à la suite de la première bande de renforcement par les pointes de l'autre face, les pointes étant inclinées vers l'extrémité de départ (32) de la deuxième bande de renforcement.

Un autre objet de l'invention est un procédé d'installation d'une nouvelle bande de renforcement à la suite d'une première bande de renforcement enroulée autour d'une partie dégradée d'une canalisation consistant à placer un manchon une plaque de retenue selon l'invention sur l'extrémité finale de ladite première bande de renforcement de manière à rendre la plaque de retenue solidaire de la première bande de renforcement grâce aux pointes de la plaque se trouvant sur sa face inférieure, puis à placer l'extrémité de début de la nouvelle bande de renforcement sur la plaque de manière à rendre la nouvelle bande solidaire de la plaque grâce aux pointes de la plaque se trouvant sur sa face supérieure.

### Description brève des figures

Les buts, objets et caractéristiques de l'invention apparaîtront plus clairement à la lecture de la description qui suit faite en référence aux dessins dans lesquels :
la figure 1 représente une partie extérieure dégradée d'une canalisation sur laquelle on a effectué une réparation par installation d'un manchon ;
la figure 2 représente une partie intérieure dégradée d'une canalisation sur laquelle on a effectué une réparation par installation d'un manchon ;
la figure 3 représente une vue en coupe d'une plaque de retenue selon l'invention ; et
la figure 4 représente la mise en place d'une nouvelle bande de renforcement au moyen d'une plaque de retenue selon l'invention.

### Description détaillée de l'invention

Les figures 1 et 2 qui concernent une canalisation ayant une portion dégradée pour laquelle la réparation consiste à installer un manchon ont déjà été décrites dans l'état de la technique.

La figure 3 représente une plaque de retenue selon l'invention vue en coupe. La plaque proprement dite 30 est composée d'un matériau rigide qui peut être toute matière appropriée telle que du plastique très dur ou de préférence du métal tel que l'acier, l'aluminium, etc. La plaque est généralement de forme rectangulaire dont la largeur est inférieure ou égale à la largeur de la bande de renforcement.

La plaque de retenue 30 comporte des pointes 22 sur une face et des pointes 24 sur l'autre face. Ces pointes d'une longueur comprise entre 1 et 3 mm sont inclinées par rapport à la face de la plaque. Cette inclinaison correspond à un angle aigu dans le sens direct par rapport à la face sur laquelle elles se trouvent compris entre 30° et 60°, de préférence égal à 45°. A noter que, dans ce dernier cas, les pointes des deux faces de la plaque sont parallèles.

Un mode de réalisation de la plaque consiste à utiliser une grille métallique. Les pointes sont formées en coupant à intervalles réguliers les côtés des mailles de la grille et en les redressant d'un angle déterminé par rapport à la grille compris entre 30° et 60° dans le sens direct par rapport à la face.

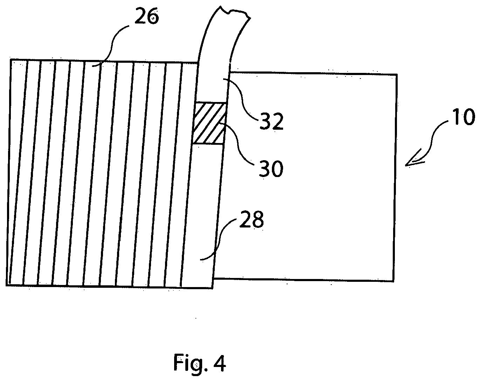

La figure 4 montre comment est utilisée la plaque de retenue 30 munie de ses pointes 22 et 24 représentées sur la figure 3. La première bande de renforcement 26 est enroulée autour de la partie dégradée de la canalisation 10 comme expliqué en référence à la figure 3 jusqu'à sa portion finale 28. Une plaque de retenue 30 selon l'invention est alors placée sur l'extrémité de cette portion finale de manière à être rendue solidaire de la bande de renforcement grâce aux pointes de la plaque se trouvant sur sa face inférieure qui s'enfoncent dans la bande de renforcement. A noter que la plaque est placée sur la bande de renforcement de manière à ce que les pointes de la face inférieure soient inclinées vers l'extrémité finale de la bande 26 déjà enroulée de sorte que, lorsqu'une traction sera exercée sur la plaque de retenue vers l'extrémité de la bande, la plaque soit retenue solidement en place.

Puis, l'extrémité de départ 32 de la nouvelle bande de renforcement est placée sur la plaque de retenue de manière à être rendue solidaire de la plaque de retenue grâce aux pointes de cette dernière qui s'enfoncent dans cette dernière. A noter que les pointes de la face supérieure de la plaque sont inclinées vers l'extrémité de départ 32 de la nouvelle bande de sorte qu'une traction exercée sur la nouvelle bande de renforcement lors de son enroulement retienne solidement la bande alors que, si les pointes étaient dans l'autre sens, la bande se séparerait de la plaque sous l'effet de la traction.

Ainsi, du fait que les pointes de la face supérieure de la plaque forment un angle aigu compris entre 30° et 60° avec la bande de renforcement, c'est à dire qu'elles sont sensiblement dans le même sens que les pointes de la face inférieure, la nouvelle bande de renforcement est retenue solidement à la plaque et celle-ci à la première bande de renforcement et est donc rendue solidaire de la première bande de renforcement. Il est donc aisé de procéder à l'enroulement sous traction de la nouvelle bande de renforcement sans le risque que celle-ci glisse sous l'effet de la traction.

Dans un mode de réalisation préférentiel décrit dans la demande de brevet de Monaco n°2593, chaque bande de renforcement comprend au moins un fil conducteur intégré dans le sens longitudinal, les propriétés électriques du fil (ou des fils) étant utilisées pour les opérations comprenant la réticulation de la résine, la détection de la portion de la canalisation comportant le manchon ou la détection des portions réparées de la canalisation ayant subi une augmentation de diamètre due à un amincissement de la paroi. Le fil conducteur intégré est de préférence un fil métallique intégré.

Comme mentionné précédemment, la plaque de retenue est de préférence en métal. En utilisant ce mode de réalisation préférentiel, les deux bords métalliques de la plaque sont donc en contact avec l'extrémité du (ou des fils) intégré dans chacune des bandes de renforcement reliées par la plaque de retenue. Ainsi, la plaque de retenue assure la continuité physique de l'ensemble des bandes de renforcement, mais également leur continuité électrique.

## Revendications

1. Manchon adapté à la réparation d'une portion dégradée d'une canalisation comprenant une première bande de renforcement (26) apte à être placée sur la portion dégradée de la canalisation et au moins une deuxième bande de renforcement, lesdites bandes de renforcement étant reliées par une plaque de retenue en matériau rigide (30) comportant des pointes (22, 24) sur chacune de ses deux faces, les pointes de chacune des faces d'une longueur comprise entre 1 et 3 mm faisant un angle avec la base de la face sur laquelle elles se trouvent compris entre 30° et 60°, ladite plaque étant, d'une part, rendue solidaire par les pointes d'une de ses faces à la première bande de renforcement, lesdites pointes étant inclinées vers l'extrémité finale de ladite première bande de renforcement et, d'autre part, rendue solidaire de la deuxième bande de renforcement à enrouler à la suite de la première bande de renforcement par les pointes de l'autre face, lesdites pointes étant inclinées vers l'extrémité de départ (32) de ladite deuxième bande de renforcement.

2. Manchon selon la revendication 1, dans lequel, lesdites pointes (22, 24) font un angle de 45° dans le sens direct avec la face sur laquelle elles se trouvent.

3. Manchon selon la revendication 1, ou 2, dans lequel ledit matériau rigide est du métal tel que de l'acier.

4. Manchon selon la revendication 3, dans lequel ladite plaque de retenue (30) est une grille métallique et lesdites pointes sont formées en coupant à intervalles réguliers les côtés des mailles de la grille et en les redressant d'un angle déterminé par rapport à la grille compris entre 30° et 60°.

5. Manchon selon l'une des revendications 1 à 4, dans lequel ladite plaque de retenue (30) est composée de métal de manière à ce que ladite plaque soit en contact à ses deux extrémités avec un fil conducteur intégré dans chacune desdites première et deuxième bandes de renforcement de façon à assurer la continuité électrique entre lesdites bandes de renforcement.

6. Procédé d'installation d'une deuxième bande de renforcement à la suite d'une première bande de renforcement enroulée autour d'une partie dégradée d'une canalisation consistant à placer un manchon selon l'une des revendications 1 à 4 sur l'extrémité finale de ladite première bande de renforcement de manière à rendre ladite plaque de retenue (30) solidaire de la première bande de renforcement grâce aux pointes de la plaque se trouvant sur sa face inférieure, puis à placer l'extrémité de départ (32) de la nouvelle bande de renforcement sur ladite plaque de manière à rendre ladite bande solidaire de ladite plaque grâce aux pointes de la plaque se trouvant sur sa face supérieure.

## Patentansprüche

1. Manschette, welche für die Reparatur eines abgebauten Abschnitts einer Leitung eingerichtet ist, umfassend ein erstes Verstärkungsband (26), das geeignet ist, auf den abgebauten Abschnitt der Leitung platziert zu werden, und mindestens ein zweites Verstärkungsband, wobei die Verstärkungsbänder durch eine Halteplatte (30) aus einem steifen Material verbunden sind, die Spitzen (22, 24) auf jeder ihrer beiden Flächen umfasst, wobei die Spitzen jeder der Flächen mit einer Länge zwischen 1 und 3 mm einen Winkel zwischen 30° und 60° mit der Basis der Fläche bilden, auf der sie sich befinden, wobei die Platte einerseits durch die Spitzen einer ihrer Flächen mit dem ersten Verstärkungsband verbunden wird, wobei die Spitzen zum letzten Ende des ersten Verstärkungsbands hin geneigt sind, und andererseits durch die Spitzen der anderen Fläche mit dem zweiten Verstärkungsband verbunden wird, das im Anschluss an das erste Verstärkungsband durch die Spitzen der anderen Fläche aufzuwickeln ist, wobei die Spitzen zum Ausgangsende (32) des zweiten Verstärkungsbands hin geneigt sind.

2. Manschette nach Anspruch 1,
wobei die Spitzen (22, 24) einen Winkel von 45° in der Vorwärtsrichtung mit der Fläche, auf der sie sich befinden, bilden.

3. Manschette nach Anspruch 1 oder 2,
wobei das steife Material aus Metall wie Stahl ist.

4. Manschette nach Anspruch 3,
wobei die Halteplatte (30) ein Metallgitter ist, und die Spitzen durch Schneiden der Seiten der Maschen des Gitters in regelmäßigen Intervallen und Ausrichten dieser unter einem bestimmten Winkel in Bezug auf das Gitter zwischen 30° und 60° gebildet sind.

5. Manschette nach einem der Ansprüche 1 bis 4,
wobei die Halteplatte (30) aus Metall derart besteht, dass die Platte an ihren beiden Enden mit einem leitenden Draht in Kontakt steht, der in jedem von dem ersten und zweiten Verstärkungsband integriert ist, um die elektrische Kontinuität zwischen den Verstärkungsbändern sicherzustellen.

6. Verfahren zur Installation eines zweiten Verstärkungsbands im Anschluss an ein erstes Verstärkungsband, das um einen abgebauten Teil einer Leitung gewickelt ist, welches daraus besteht, dass eine Manschette nach einem der Ansprüche 1 bis 4 auf ein letztes Ende des ersten Verstärkungsbands platziert wird, um die Halteplatte (30) mit dem ersten Verstärkungsband durch die Spitzen der Platte, die sich auf ihrer unteren Fläche befinden, zu verbinden, und dass dann das Ausgangsende (32) des neuen Verstärkungsbands auf die Platte platziert wird, um das Band mit der Platte durch die Spitzen der Platte, die sich auf ihrer oberen Fläche befinden, zu verbinden.

## Claims

1. Sleeve suitable for repairing a damaged portion of a pipe, comprising a first reinforcing strip (26) able to be placed on the damaged portion of the pipe and at least a second reinforcing strip, the said reinforcing strips being connected by a retaining plate made of a rigid material (30) comprising spikes (22, 24) on each of its two faces, the spikes of each of the faces, of a length comprised between 1 and 3 mm, making an angle of between 30° and 60° with the base of the face on which they are located, the said plate being, on the one hand, secured by the spikes of one of its faces to the first reinforcing strip, the said spikes being inclined towards the finishing end of the said first reinforcing strip and, on the other hand, secured to the second reinforcing strip that is to be wound on after the first reinforcing strip by the spikes of the other face, the said spikes being inclined towards the starting end (32) of the said second reinforcing strip.

2. Sleeve according to Claim 1, in which the said spikes (22, 24) make an angle of 45° in the direct direction with the face on which they are located.

3. Sleeve according to Claim 1 or 2, in which the said rigid material is metal such as steel.

4. Sleeve according to Claim 3, in which the said retaining plate (30) is a metal mesh and the said spikes are formed by cutting the sides of the mesh cells of the mesh at regular intervals and bending them up by a determined angle of between 30° and 60° with respect to the mesh.

5. Sleeve according to one of Claims 1 to 4, in which the said retaining plate (30) is made of metal so that the said plate is in contact at both of its ends with a conducting wire integrated into each of the said first and second reinforcing strips so as to ensure electrical continuity between the said reinforcing strips.

6. Method of fitting a second reinforcing strip to follow on from a first reinforcing strip wound around a damaged part of a pipe, consisting in placing a sleeve according to one of Claims 1 to 4 on the finishing end of the said first reinforcing strip so as to secure the said retaining plate (30) to the first reinforcing strip by virtue of the spikes of the plate that are situated on the underside face thereof, then in placing the starting end (32) of the new reinforcing strip on the said plate so as to secure the said strip to the said plate by virtue of the spikes of the plate that are situated on the upper face thereof.
